# EUROPÄISCHE PATENTSCHRIFT

(11) **EP 2 080 791 B1**
(45) Veröffentlichungstag und Bekanntmachung des Hinweises auf die Patenterteilung: **29.05.2013**
(21) Anmeldenummer: 09000050.6
(22) Anmeldetag: 05.01.2009
(51) Int. Cl.: C09D 5/02, C09D 7/12

(54) **Dispersionsfarbe**
Dispersion paint
Peinture à dispersion

(30) Priorität: 17.01.2008 DE 102008004844
(43) Veröffentlichungstag der Anmeldung: 22.07.2009
(73) Patentinhaber: Deutsche Amphibolin-Werke von Robert Murjahn Stiftung & Co KG, 64372 Ober-Ramstadt (DE)
(72) Erfinder: Brenner, Thomas, 64367 Mühlthal (DE); Unger, Horst, 64846 Groß-Zimmern (DE); Weinhold, Petra, 64560 Riedstadt (DE); Eigenbrodt, Dirk, 64397 Modautal (DE)
(74) Vertreter: Pfenning, Meinig & Partner GbR

(56) Entgegenhaltungen:
- EP-A1- 1 829 935
- DE-A1- 10 063 422
- US-A1- 2004 034 158
- D. STOYLE ET AL.: "Ullman's Encyclopedia of Industrial Chemistry: Paints and Coatings" 15. Dezember 2006 (2006-12-15), WILEY-VCH VERLAG GMBH , WEINHEIM , XP002525306 * Seiten 93-95 *

## Beschreibung

Die Erfindung betrifft einen Beschichtungsstoff auf Dispersionsbasis, mit dem weiße, transparente sehr gut abtönbare und bunt pigmentierte, insbesondere farbintensive und brillante, strapazierfähige und matte Oberflächen für Innen- und Außenanwendungen mit sehr guter Ausbesserungsfähigkeit und sehr guten Verarbeitungseigenschaften ermöglicht werden. Die erfindungsgemäße Dispersionsfarbe betrifft dabei sowohl unpigmentierte weiße oder transparente Beschichtungsstoffe, ebenso wie pigmentierte Beschichtungsstoffe.

Im Bereich der Dispersionsfarben ist in den vergangenen Jahren ein zunehmender Trend zu intensiven Farbtönen festzustellen. Mit intensiveren Farbtönen sind dabei besondere Anforderungen verbunden.

Eine erste Anforderung betrifft ein ausreichendes Deckvermögen intensiver Farbtöne. Unter Deckvermögen ist die Fähigkeit eines Beschichtungsstoffes zu verstehen, die Farbe oder Farbunterschiede eines Untergrundes zu verdecken. Es wird durch Pigmente erreicht und kann durch eine Kombination mit entsprechenden Füllstoffen erhöht werden. Füllstoffe weisen in den meisten Fällen ein schlechteres Deckvermögen als Pigmente auf. Sie helfen allerdings, die Schichtdicke zu erhöhen. Füllstoffe besitzen eine Eigenfärbung, durch die der Farbton beeinflusst werden kann. Deshalb werden deckende Füllstoffe bei intensiv farbigen Tönen nur begrenzt eingesetzt.

Das Deckvermögen hängt daher vor allem von den verwendeten Pigmenten, dem Farbton und der möglichen Schichtdicke eines Anstrichs ab. Dabei zeigen weiße oder pastellige Farbtöne in der Regel ein hohes Deckvermögen. Pastellige Farbtöne werden aus einem weißen Basismaterial hergestellt. Es enthält neben einem hochdeckenden Weißpigment, z.B. Titandioxid, einen hohen Füllstoffanteil. So ergibt sich eine hohe Schichtdicke, die das Deckvermögen zusätzlich verbessert.

Für stark farbige Beschichtungsstoffe gibt es zahlreiche Pigmente. Sie bilden die wichtigste Komponente für das Deckvermögen und unterteilen sich in anorganische und organische Pigmente. Aus dem Stand der Technik bekannte Beschichtungsstoffe sind am wirkungsvollsten mit sehr brillanten Pigmenten zu realisieren. Daher werden organische Pigmente eingesetzt, mit denen eine sehr hohe Brillanz erzielbar ist. Die maximale Pigmentzugabe ist aber begrenzt, was zu einem schlechteren Deckvermögen führt. Dies hat wiederum zur Konsequenz, dass Kontraste im Untergrund häufig auch nach mehreren Farbaufträgen durchschimmern. Die Beschichtung deckt deshalb häufig erst bei hoher Schichtdicke, was durch eine Vielzahl von Anstrichen erreicht wird. Mehrere Arbeitsgänge bedeuten jedoch höhere Kosten. Im Stand der Technik wurde dieses Problem bislang durch einen deckenden Voranstrich gelöst, der in Richtung des gewünschten Farbtones lag. Danach reichte ein ein- bis zweimaliger Auftrag des Beschichtungsstoffes im Wunschfarbton.

Ein weiteres Problem intensiv farbiger Beschichtungsstoffe, wie sie aus dem Stand der Technik bekannt sind, betrifft den sog. Schreibeffekt. Dieser tritt insbesondere bei matten Beschichtungen auf. Bei Berührung oder Reibung der matten Oberfläche, z.B. wenn mit einem Gegenstand die Beschichtung gestreift wird, entsteht eine hellere Reibstelle, die im Streiflicht glänzt.

Dies ist darauf zurückzuführen, dass jede deckende Farbe bekanntlich neben Pigmenten auch Füllstoffe enthält. Diese werden bei farbigen Beschichtungen von Pigmenten überlagert. Bei glänzenden Anstrichen werden die Pigmente durch das Bindemittel umhüllt, bei matten liegen sie hingegen an der Oberfläche frei. Bei Berührung oder Reibung derartiger matter Oberflächen werden die Pigmente zur Seite geschoben, wodurch die helleren Füllstoffe freigelegt werden. Dadurch erscheint diese Stelle für den Betrachter heller. Matte Beschichtungsstoffe zeichnen sich durch eine unebene Oberfläche aus, so dass es beim Reiben der Oberfläche auch zum Abbrechen erhabener Stellen kommen kann, wodurch ebenfalls helle Füllstoffe sichtbar werden. Durch dieses Abbrechen und das damit verbundene Glätten der Oberfläche kommt es an den verletzten Stellen zu einer Erhöhung des Glanzgrades.

Aus der DE 10 2004 049 592 A1 sind sog. Soft-Touch-Lacke bekannt, die auf 2-Komponentensystemen basierend auf Polyurethan beruhen. Hierbei handelt es sich jedoch um vernetzende Systeme, d.h. es kommt zu einer Vernetzung der beiden Komponenten.

In der US2004/0034158 ist eine wasserbasierte Farbe beschrieben, die 5 bis 30 Gew.-% Latex-Bindemittel, 5 bis 60 Gew.-% Polyvinylchloridpartikel, 1 bis 10 Gew.-% Mattierungsmittel, wie z.B. Polyethylen-, Polypropylenharz, Cellulosefaser und ihre Mischungen, Füllstoffe und Wasser enthält. Die beschichteten Oberflächen zeigen einen besseren Schreibeffekt und eine bessere Kratzfestigkeit.

EP1829935 beschreibt ein einen Samteffekt erzeugendes Beschichtungsmittel auf Wasserbasis, enthaltend 23-37 Gew.-% Polyvinylacetat-Bindemittel, 4-8 Gew.-% Cellulosefasern und 1,5-2,5 Gew.-% Wachs zur Verbesserung der Widerstandsfähigkeit der Oberfläche.

DE10063422 offenbart die Verwendung von Mischungen von Wachsen in wässrigen Acryllacken und die resultierende Verbesserung von Mattierung, Dispergierbarkeit und Stabilität der Lacke.

Weiterhin sind Systeme auf Basis von wässrigen Polyurethan-Acrylatdispersionen bekannt. Bei diesen Systemen kann jedoch der Schreibeffekt bei mechanischer Belastung nicht unterdrückt werden.

Ausgehend hiervon war es Aufgabe der vorliegenden Erfindung, Beschichtungsstoffe bereitzustellen, die eine hohe mechanische Strapazierfähigkeit aufweisen und bei denen der Schreibeffekt minimiert ist.

Diese Aufgabe wird durch die Dispersionsfarbe mit den Merkmalen des Anspruchs 1 gelöst. Die weiteren abhängigen Ansprüche zeigen vorteilhafte Weiterbildungen auf.

Erfindungsgemäß wird eine Dispersionsfarbe bereitgestellt, die folgende Komponenten enthält:
a) 2 bis 40 Gew.-% Polymerdispersion gerechnet als Feststoffanteil,
b) 0,1 bis 20 Gew.-% Füllstoffe,
c) 0,5 bis 20 Gew.-% Kunststoffmehl, wobei das Kunststoffmehl aus einem Material ausgewählt aus der Gruppe bestehend aus Polyethylen, Polyamid, Polyacrylnitril, Polypropylen, Polyethylenterephthalat, Polystyrol, Polyurethan, Polyacrylat, Gummi, deren Copolymeren, Blends und Polymerlegierungen besteht.
d) 0,1 bis 15 Gew.-% Wachs,
e) 0,5 bis 15 Gew.-% Fasern und
f) zu 100 Gew.-% ergänzte Anteile an Wasser.

Die erfindungsgemäße Kombination von Polymerdispersionen, Faserfüllstoffen, Kunststoffmehlen, Wachsen und Glimmerfüllstoffen ermöglicht eine deutliche Verbesserung der mechanischen Belastbarkeit dieser Beschichtungsstoffe. So erlaubt die Kombination der genannten Rezepturbestandteile, eine stumpfmatte Beschichtung zu erzielen, die den üblichen Schreibeffekt nicht zeigt.

Durch die erfindungsgemäße Kombination der genannten Rezepturbestandteile a) bis f) können besonders intensive und brillante Farbtöne erzielt werden. Der bei intensiven Farbtönen bislang immer auftretende Schreibeffekt, d.h. die Verletzbarkeit der pigmentierten Oberfläche mittels Berührung durch diverse Gegenstände, wird erfindungsgemäß minimiert bzw. nahezu vollständig eliminiert. Für mittlere Farbtöne und Pastelltöne kann durch die erfindungsgemäße Kombination der genannten Rezepturbestandteile ebenfalls eine Verbesserung der Oberflächeneigenschaften bzw. der Oberflächenempfindlichkeit erzielt werden.

Die durch die Erfindung ermöglichte geringere Empfindlichkeit von mit der Dispersionsfarbe beschichteten Oberflächen, ist umso deutlicher, je farbintensiver und brillanter der Farbton des Beschichtungsstoffes ist. Besonders bei dunklen Farbtönen zeichnet sich der Schreibeffekt an den verletzten Stellen der Oberfläche durch helle Flecken ab, was besonders kontrastreich gegenüber der dunklen Pigmentierung erscheint. Für diesen Fall wird die mit der erfindungsgemäßen Dispersionsfarbe erzielte Verbesserung gegenüber dem Stand der Technik besonders deutlich.

Ein weiterer wesentlicher Vorteil gegenüber den aus dem Stand der Technik bekannten Systemen ist die deutlich verbesserte Ausbesserungsfähigkeit der erfindungsgemäßen Dispersionsfarbe.

Erfindungsgemäß ist es bevorzugt, dass das Kunststoffmehl in einer Menge von 3 bis 15 Gew.-% eingesetzt wird. Hierbei ist der Einsatz des Kunststoffmehls als transparentes, weißes oder bunt eingefärbtes Material möglich. Als Kunststoffmehl werden Materialien eingesetzt, die ausgewählt sind aus der Gruppe bestehend aus Polyethylen, Polyamid, Polyacrylnitril, Polypropylen, Polyethylenterephthalat, Polystyrol, Polyurethan, Polyacrylat, Gummi, deren Copolymeren, Blends und Polymerlegierungen. Ebenso ist es möglich, dass das Kunststoffmehl aus einer Mischung der zuvor genannten Materialien besteht.

Das Kunststoffmehl weist dabei vorzugsweise eine Partikelgröße im Bereich von 1 bis 250 µm auf. Sofern die Dispersionsfarbe für die Spritzapplikation vorgesehen ist, beträgt die Partikelgröße des Kunststoffmehls vorzugsweise bis zu 100 µm.

Es ist weiterhin bevorzugt, dass die erfindungsgemäße Dispersionsfarbe 3 bis 10 Gew.-% Fasern enthält. Der Einsatz derartiger Fasern unterstützt den positiven Effekt der Kunststoffmehle. Wird die erfindungsgemäße Dispersionsfarbe ausschließlich durch Rollapplikation verarbeitet, so können Fasern bis zu einer Länge von maximal 200 µm eingesetzt werden. Im Falle einer Airless-Spritzapplikation liegt die Faserlänge vorzugsweise in einem Bereich von 10 bis 100 µm, besonders bevorzugt von 10 bis 50 µm.

Die Fasern sind dabei vorzugsweise ausgewählt aus der Gruppe bestehend aus Cellulosefasern, Polymerfasern, insbesondere Polyamide, z.B. Dralon und Nylon, Acrylnitril und Mischungen hiervon. Die Fasern können dabei sowohl in geschnittener als auch gemahlener Form eingesetzt werden.

Die erfindungsgemäße Dispersionsfarbe enthält vorzugsweise als Polymerdispersionen solche, die aus den Monomeren Carbonsäurevinylester mit 3 bis 20 C-Atomen, N-Vinylpyrrolidon, Vinylaromaten, Vinylhalogeniden, ethylenisch ungesättigten Carbonsäuren, deren Ester, deren Amide oder deren Anhydriden, Nanohybriddispersionen, Wasserglas, Silikonharzemulsionen, wäßrige Polyurethan-Dispersionen, Styrolacrylate, α -Olefinen und/oder 1,3-Dienen in Form wässriger Polymerdispersionen oder in Wasser redispergierbarer Polymerpulver gebildet sind. Besonders bevorzugt ist die Polymerdispersion ausgewählt aus der Gruppe bestehend aus Vinylacetat-Homopolymeren, Vinylacetat-Ethylen-Copolymeren, Vinylacetat-Ethylen-Acrylat-Terpolymeren, Acrylat-Dispersionen, Vinylester von Versatic-Säuren und Mischungen hiervon. Die Dispersionsfarbe enthält dabei bevorzugt 5 bis 30 Gew.-%, besonders bevorzugt 10 bis 25 Gew.-%, jeweils gerechnet als Feststoffanteil, der Polymerdispersion.

Vorzugsweise enthält die Dispersionsfarbe 1 bis 8 Gew.-% Wachs. Hierbei können sowohl Wachspulver als auch Wachsemulsionen eingesetzt werden. Derartige Wachse optimieren die Oberflächeneigenschaften hinsichtlich der Mattierung und der Ausbesserungsfähigkeit. Die Wachse sind vorzugsweise ausgewählt aus der Gruppe bestehend aus Polyethylen-, hochdichtem Polyethylen(HDPE)-, Paraffin-, Montan-, Carnauba-, Amid-Wachs, PTFE-Wachse, PP-Wachse, Silikonwachse, deren Präparationen und Mischungen.

Bevorzugt sind als Füllstoffe Glimmerfüllstoffe, insbesondere Biotit, Muskovit und/oder Mischungen hiervon enthalten. Besonders bevorzugt wird Muskovit eingesetzt. Die Füllstoffe haben dabei bevorzugt eine Partikelgröße < 100 µm.

Ebenso ist es möglich, dass die erfindungsgemäße Dispersionsfarbe als Füllstoffe Silikat-, Carbonat- oder Sulfat-Füllstoffe enthält. Diese sind vorzugsweise in einer Menge von 0,1 bis 20 Gew.-% enthalten. Als silikatische Füllstoffe werden vorzugsweise Kaolin oder Talkum, Quarzmehl, sowie Kieselsäuren eingesetzt. Bei den Carbonat-Füllstoffen sind Calciumcarbonat oder Magnesiumcarbonat oder Mischungen (Dolomit) bevorzugt. Als Sulfat-Füllstoff ist Bariumsulfat bevorzugt. Der Einsatz dieser Füllstoffe ermöglicht die Einstellung des Füllgrades der erfindungsgemäßen Dispersionsfarbe.

Weiterhin kann die Dispersionsfarbe Titanoxid enthalten, so dass das Deckvermögen und die Farbtonbrillanz der Dispersionsfarbe eingestellt werden können. Hierzu werden herkömmliche Anatas- und Rutil-Pigmente verwendet, die in einer Menge von 0,1 bis 30 Gew.-% enthalten sein können.

Es ist ebenso möglich, dass die Dispersionsfarbe Buntpigmente oder Präparationen hiervon in einer Menge von 0,1 bis 20 Gew.-% enthält.

Als weiterer Bestandteil kann die Dispersionsfarbe Additive in einer Menge von 0,1 bis 5 Gew.-% enthalten. Unter Additiven sind hier sowohl herkömmliche Verdicker, wie Celluloseether, Guarkernmehle, Schichtsilikate, Polyurethan- und Acrylatverdicker, Silikone sowie standardmäßig eingesetzte Entschäumer, Netz- und Dispergiermittel sowie Konservierungsmittel zur Film- und Topfkonservierung zu verstehen.

In Tabelle 1 sind erfindungsgemäße Dispersionsfarben und ihre Zusammensetzung aufgeführt.

**Tabelle 1**

| | **Nr. 1** | **Nr. 2** | **Nr. 3** | **Nr. 4** | **Nr. 5** | **Nr. 6** | **Nr. 7** | **Nr. 8** | **Nr. 9** | **Nr.10** | **Nr.11** | **Nr.12** |
|---|---|---|---|---|---|---|---|---|---|---|---|---|
| Wasser | 61,1 | 51,8 | 43,8 | 37,3 | 42,3 | 47 | 37,5 | 25,5 | 34,2 | 55 | 34 | 29,5 |
| Titandioxid | 0 | 5 | 0 | 3 | 20 | 0 | 13 | 7 | 0 | 2 | 5 | 30 |
| Carbonate | 5 | 10 | 5 | 5 | 0 | 0 | 0 | 12 | 8 | 3 | 0 | 0 |
| Silikate | 5 | 5 | 10 | 5 | 0 | 0 | 3 | 8 | 5 | 2 | 0 | 2,5 |
| Fasern | 1 | 6 | 8 | 2 | 3 | 15 | 4 | 4 | 5 | 2 | 4 | 3 |
| Glimmer | 10 | 2 | 5 | 8 | 3 | 6 | 5 | 7 | 8 | 4 | 18 | 8 |
| Kunststoffmehle | 5 | 4 | 3 | 15 | 11 | 5 | 8 | 20 | 8 | 16 | 6 | 7 |
| Wachspräparationen | 1 | 2 | 6 | 3 | 4 | 8 | 13 | 7 | 5 | 9 | 1 | 6 |
| Kunststoffdispersion (fest) | 10 | 12,5 | 17,5 | 20 | 15 | 17,5 | 15 | 7,5 | 25 | 5 | 30 | 12,5 |
| Additive | 1,9 | 1,7 | 1,7 | 1,7 | 1,7 | 1,5 | 1,5 | 2 | 1,8 | 2 | 2 | 1,5 |

## Patentansprüche

1. Dispersionsfarbe enthaltend
a) 2 bis 40 Gew.-% Polymerdispersion gerechnet als Feststoffanteil,
b) 0,1 bis 20 Gew.-% Füllstoffe,
c) 0,5 bis 20 Gew.-% Kunststoffmehl, wobei das Kunststoffmehl aus einem Material ausgewählt aus der Gruppe bestehend aus Polyethylen, Polyamid, Polyacrylnitril, Polypropylen, Polyethylenterephthalat, Polystyrol, Polyurethan, Polyacrylat, Gummi, deren Copolymeren, Blends und Polymerlegierungen besteht,
d) 0,1 bis 15 Gew.-% Wachs,
e) 0,5 bis 15 Gew.-% Fasern und
f) zu 100 Gew.-% ergänzte Anteile an Wasser.

2. Dispersionsfarbe nach Anspruch 1,
**dadurch gekennzeichnet, dass** 3 bis 15 Gew.-% Kunststoffmehl enthalten ist.

3. Dispersionsfarbe nach einem der vorhergehenden Ansprüche,
**dadurch gekennzeichnet, dass** das Kunststoffmehl eine Partikelgröße im Bereich von 1 bis 250 µm aufweist.

4. Dispersionsfarbe nach einem der vorhergehenden Ansprüche,
**dadurch gekennzeichnet, dass** 3 bis 10 Gew.-% Fasern enthalten sind.

5. Dispersionsfarbe nach einem der vorhergehenden Ansprüche,
**dadurch gekennzeichnet, dass** die Fasern ausgewählt sind aus der Gruppe bestehend aus Cellulosefasern, Polymerfasern, insbesondere Polyamide, Acrylonitril und Mischungen hiervon.

6. Dispersionsfarbe nach einem der vorhergehenden Ansprüche,
**dadurch gekennzeichnet, dass** die Fasern geschnitten und/oder gemahlen sind.

7. Dispersionsfarbe nach einem der vorhergehenden Ansprüche,
**dadurch gekennzeichnet, dass** die Fasern eine Länge von 10 bis 200 µm, insbesondere 10 bis 50 µm aufweisen.

8. Dispersionsfarbe nach einem der vorhergehenden Ansprüche,
**dadurch gekennzeichnet, dass** die Polymerdispersion ausgewählt ist aus der Gruppe bestehend aus Polymeren, die aus den Monomeren Carbonsäurevinylester mit 3 bis 20 C-Atomen, N-Vinylpyrrolidon, vinylaromaten, Vinylhalogeniden, ethylenisch ungesättigten Carbonsäuren, deren Ester, deren Amide oder deren Anhydriden, Nanohybriddispersionen, Wasserglas, Silikonharzemulsionen, wäßrige PU-Dispersionen, Styrolacrylate, α-Olefinen und/oder 1,3-Dienen in Form wässriger Polymerdispersionen oder in Wasser redispergierbarer Polymerpulver gebildet sind.

9. Dispersionsfarbe nach einem der vorhergehenden Ansprüche,
**dadurch gekennzeichnet, dass** die Polymerdispersion ausgewählt ist aus der Gruppe bestehend aus Vinylacetat-Homopolymeren, Vinylacetat-EthylenCopolymeren, Vinylacetat-Ethylen-Acrylat-Terpolymeren, Acrylat-Dispersionen, Vinylester von Versatic-Säuren und Mischungen hiervon.

10. Dispersionsfarbe nach einem der vorhergehenden Ansprüche,
**dadurch gekennzeichnet, dass** 5 bis 30 Gew.-%, insbesondere 10 bis 25 Gew.-% Polymerdispersion enthalten sind.

11. Dispersionsfarbe nach einem der vorhergehenden Ansprüche,
**dadurch gekennzeichnet, dass** 1 bis 8 Gew.-% Wachs enthalten ist.

12. Dispersionsfarbe nach einem der vorhergehenden Ansprüche,
**dadurch gekennzeichnet, dass** das Wachs ausgewählt ist aus Polyethylen-, hochdichtes Polyethylen(HDPE)-, Paraffin-, Montan-, Carnauba-, Amid-Wachs, PTFE-Wachse, PP-Wachse, Silikonwachse, deren Präparationen und Mischungen.

13. Dispersionsfarbe nach einem der vorhergehenden Ansprüche,
**dadurch gekennzeichnet, dass** als Füllstoffe Glimmerfüllstoffe enthalten sind.

14. Dispersionsfarbe nach Anspruch 13,
**dadurch gekennzeichnet, dass** als Glimmerfüllstoffe Biotit und/oder Muskovitglimmer, insbesondere mit einer Partikelgröße < 100 µm, enthalten sind.

15. Dispersionsfarbe nach einem der vorhergehenden Ansprüche,
**dadurch gekennzeichnet, dass** als Füllstoffe solche ausgewählt aus der Gruppe bestehend aus Silikaten, Carbonaten, Sulfaten und Mischungen hiervon enthalten sind.

16. Dispersionsfarbe nach Anspruch 15,
**dadurch gekennzeichnet, dass** die weiteren Füllstoffe in einer Menge von 1 bis 40 Gew.-%, insbesondere 1 bis 20 Gew.-% enthalten sind.

17. Dispersionsfarbe nach Anspruch 15 oder 16,
**dadurch gekennzeichnet, dass** als Silikate Kaolin und/oder Talkum, Quarzmehl, Kieselsäuren enthalten sind.

18. Dispersionsfarbe nach Anspruch 15 bis 17,
**dadurch gekennzeichnet, dass** als Carbonate Calciumcarbonat, Magnesiumcarbonat und/oder Dolomit enthalten sind.

19. Dispersionsfarbe nach einem der vorhergehenden Ansprüche,
**dadurch gekennzeichnet, dass** Titanoxid, insbesondere in Form von Anatas und/oder Rutil, in einer Menge von 0,1 bis 30 Gew.-% enthalten ist.

20. Dispersionsfarbe nach einem der vorhergehenden Ansprüche,
**dadurch gekennzeichnet, dass** Buntpigmente oder Präparationen hiervon in einer Menge von 0,1 bis 20 Gew.-% enthalten sind.

21. Dispersionsfarbe nach einem der vorhergehenden Ansprüche,
**dadurch gekennzeichnet, dass** Additive in einer Menge von 0,1 bis 5 Gew.-% enthalten sind.

22. Dispersionsfarbe nach dem vorhergehenden Anspruch,
**dadurch gekennzeichnet, dass** die Additive ausgewählt sind aus der Gruppe bestehend aus Verdickern, Entschäumer, Netz- und Dispergiermittel, Konservierungsmittel, Silikone und Mischungen hiervon.

## Claims

1. An emulsion paint containing
a) 2 to 40 wt.% polymer dispersion calculated as solids content,
b) 0.1 to 20 wt.% fillers,
c) 0.5 to 20 wt.% plastic powder, the plastic powder consisting of a material selected from the group consisting of polyethylene, polyamide, polyacrylonitrile, polypropylene, polyethylene terephthalate, polystyrene, polyurethane, polyacrylate, rubber, their copolymers, blends and polymer alloys,
d) 0.1 to 15 wt.% wax,
e) 0.5 to 15 wt.% fibres and
f) proportions of water made up to 100 wt.%.

2. The emulsion paint according to claim 1,
**characterised in that** 3 to 15 wt.% plastic powder is contained.

3. The emulsion paint according to one of the preceding claims,
**characterised in that** the plastic powder has a particle size in the range of 1 to 250 µm.

4. The emulsion paint according to one of the preceding claims,
**characterised in that** 3 to 10 wt.% fibres are contained.

5. The emulsion paint according to one of the preceding claims,
**characterised in that** the fibres are selected from the group consisting of cellulose fibres, polymer fibres, particularly polyamides, acrylonitrile and mixtures thereof.

6. The emulsion paint according to one of the preceding claims,
**characterised in that** the fibres are cut and/or ground.

7. The emulsion paint according to one of the preceding claims,
**characterised in that** the fibres have a length of 10 to 200 µm, particularly 10 to 50 µm.

8. The emulsion paint according to one of the preceding claims,
**characterised in that** the polymer dispersion is selected from the group consisting of polymers which are formed from the monomers carboxylic acid vinyl esters with 3 to 20 C atoms, N-vinylpyrrolidone, vinyl aromatics, vinyl halides, ethylenically unsaturated carboxylic acids, their esters, amides or anhydrides, nanohybrid dispersions, water glass, silicone resin emulsions, aqueous PU dispersions, styrene acrylates, α-olefins and/or 1,3-dienes in the form of aqueous polymer dispersions or polymer powders which are redispersible in water.

9. The emulsion paint according to one of the preceding claims,
**characterised in that** the polymer dispersion is selected from the group consisting of vinyl acetate homopolymers, vinyl acetate-ethylene copolymers, vinyl acetate-ethylene-acrylate terpolymers, acrylate dispersions, vinyl esters of versatic acids and mixtures thereof.

10. The emulsion paint according to one of the preceding claims,
**characterised in that** 5 to 30 wt.%, particularly 10 to 25 wt.% polymer dispersion are contained.

11. The emulsion paint according to one of the preceding claims,
**characterised in that** 1 to 8 wt.% wax is contained.

12. The emulsion paint according to one of the preceding claims,
**characterised in that** the wax is selected from polyethylene wax, high-density polyethylene (HDPE) wax, paraffin wax, montan wax, carnauba wax, amide wax, PTFE waxes, PP waxes, silicone waxes, preparations thereof and mixtures thereof.

13. The emulsion paint according to one of the preceding claims,
**characterised in that** mica fillers are contained as fillers.

14. The emulsion paint according to claim 13,
**characterised in that** biotite and/or muscovite mica, particularly with a particle size of < 100 µm, are contained as mica fillers.

15. The emulsion paint according to one of the preceding claims,
**characterised in that** as fillers, those selected from the group consisting of silicates, carbonates, sulfates and mixtures thereof are contained.

16. The emulsion paint according to claim 15,
**characterised in that** the other fillers are contained in a quantity of 1 to 40 wt.%, particularly 1 to 20 wt.%.

17. The emulsion paint according to claim 15 or 16,
**characterised in that** kaolin and/or talcum, silica flour, silicas are contained as silicates.

18. The emulsion paint according to claims 15 to 17,
**characterised in that** calcium carbonate, magnesium carbonate and/or dolomite are contained as carbonates.

19. The emulsion paint according to one of the preceding claims,
**characterised in that** titanium oxide is contained, particularly in the form of anatase and/or rutile, in a quantity of 0.1 to 30 wt.%.

20. The emulsion paint according to one of the preceding claims,
**characterised in that** coloured pigments or preparations thereof are contained in a quantity of 0.1 to 20 wt.%.

21. The emulsion paint according to one of the preceding claims,
**characterised in that** additives are contained in a quantity of 0.1 to 5 wt.%.

22. The emulsion paint according to the preceding claim,
**characterised in that** the additives are selected from the group consisting of thickeners, defoamers, wetting and dispersing agents, preservatives, silicones and mixtures thereof.

## Revendications

1. Peinture de dispersion contenant
a) 2 à 40 % en poids d'une dispersion de polymère, calculés en teneur en matière solide,
b) 0,1 à 20 % en poids de matières de charge,
c) 0,5 à 20 % en poids de poudre de plastique, dans laquelle la poudre de plastique consiste en un matériau choisi dans le groupe consistant en le polyéthylène, le polyamide, le polyacrylonitrile, le polypropylène, le polytéréphtalate d'éthylène, le polystyrène, le polyuréthane, le polyacrylate, le caoutchouc, et les copolymères, mélanges et alliages polymères de ceux-ci,
d) 0,1 à 15 % en poids de cire,
e) 0,5 à 15 % en poids de fibres, et
f) de l'eau, en une quantité suffisante pour un complément permettant d'atteindre 100 % en poids.

2. Peinture de dispersion selon la revendication 1, **caractérisée en ce qu'**elle contient 3 à 15 % en poids de poudre de plastique.

3. Peinture de dispersion selon l'une des revendications précédentes, **caractérisée en ce que** la poudre de plastique a une taille particulaire comprise dans la plage de 1 à 250 µm.

4. Peinture de dispersion selon l'une des revendications précédentes, **caractérisée en ce qu'**elle contient 3 à 10 % en poids de fibres.

5. Peinture de dispersion selon l'une des revendications précédentes, **caractérisée en ce que** les fibres sont choisies dans le groupe consistant en les fibres de cellulose, les fibres de polymère, en particulier les polyamides, l'acrylonitrile et les mélanges de ceux-ci.

6. Peinture de dispersion selon l'une des revendications précédentes, **caractérisée en ce que** les fibres sont coupées et/ou moulues.

7. Peinture de dispersion selon l'une des revendications précédentes, **caractérisée en ce que** les fibres présentent une longueur de 10 à 200 µm, en particulier de 10 à 50 µm.

8. Peinture de dispersion selon l'une des revendications précédentes, **caractérisée en ce que** la dispersion de polymère est choisie dans le groupe consistant en les polymères qui sont formés à partir des monomères esters vinyliques d'acides carboxyliques avec 3 à 20 atomes de C, de la N-vinylpyrrolidone, de vinylaromates, d'halogénures de vinyle, d'acides carboxyliques à insaturation éthylénique, de leurs esters, de leurs amides ou de leurs anhydrides, de dispersions nanohybrides, de verre soluble, d'émulsions de résine de silicone, de dispersions aqueuses de PU, d'acrylates de styrène, d'α-oléfines et/ou de 1,3-diènes sous forme de dispersions de polymère aqueuses ou de poudres de polymère redispersibles dans l'eau.

9. Peinture de dispersion selon l'une des revendications précédentes, **caractérisée en ce que** la dispersion de polymère est choisie dans le groupe consistant en les homopolymères d'acétate de vinyle, les copolymères acétate de vinyle-éthylène, les terpolymères acétate de vinyle-éthylène-acrylate, les dispersions d'acrylate, les esters vinyliques d'acides versatiques, et les mélanges de ceux-ci.

10. Peinture de dispersion selon l'une des revendications précédentes, **caractérisée en ce qu'**elle contient 5 à 30 % en poids, en particulier 10 à 25 % en poids d'une dispersion de polymère.

11. Peinture de dispersion selon l'une des revendications précédentes, **caractérisée en ce qu'**elle contient 1 à 8 % en poids de cire.

12. Peinture de dispersion selon l'une des revendications précédentes, **caractérisée en ce que** la cire est choisie parmi les cires de polyéthylène, de polyéthylène haute densité (PEHD), de paraffine, de lignite, de carnauba, d'amide, les cires de PTFE, les cires de PP, les cires de silicone, leurs préparations et mélanges.

13. Peinture de dispersion selon l'une des revendications précédentes, **caractérisée en ce qu'**elle contient en tant que matières de charge des matières de charge micacées.

14. Peinture de dispersion selon la revendication 13, **caractérisée en ce qu'**elle contient, en tant que matières de charge micacées, de la biotite et/ou du mica muscovite, avec en particulier une taille particulaire < 100 µm.

15. Peinture de dispersion selon l'une des revendications précédentes, **caractérisée en ce qu'**elle contient, en tant que matières de charge, celles qui sont choisies dans le groupe consistant en les silicates, les carbonates, les sulfates et les mélanges de ceux-ci.

16. Peinture de dispersion selon la revendication 15, **caractérisée en ce qu'**elle contient les autres matières de charge en une quantité de 1 à 40 % en poids, en particulier de 1 à 20 % en poids.

17. Peinture de dispersion selon la revendication 15 ou 16, **caractérisée en ce qu'**elle contient, en tant que silicates, du kaolin et/ou du talc, de la poudre de quartz, des silices.

18. Peinture de dispersion selon les revendications 15 à 17, **caractérisée en ce qu'**elle contient, en tant que carbonates, du carbonate de calcium, du carbonate de magnésium et/ou de la dolomie.

19. Peinture de dispersion selon l'une des revendications précédentes, **caractérisée en ce qu'**elle contient de l'oxyde de titane, en particulier sous forme d'anatase et/ou de rutile, en une quantité de 0,1 à 30 % en poids.

20. Peinture de dispersion selon l'une des revendications précédentes, **caractérisée en ce qu'**elle contient des pigments de couleur ou des préparations de ces derniers, en une quantité de 0,1 à 20 % en poids.

21. Peinture de dispersion selon l'une des revendications précédentes, **caractérisée en ce qu'**elle contient des additifs en une quantité de 0,1 à 5 % en poids.

22. Peinture de dispersion selon la revendication précédente, **caractérisée en ce que** les additifs sont choisis dans le groupe consistant en les épaississants, les antimousses, les agents mouillants et dispersants, les agents conservateurs, les silicones et les mélanges de ceux-ci.
